# EUROPÄISCHE PATENTSCHRIFT

(11) **EP 3 928 943 B1**
(45) Veröffentlichungstag und Bekanntmachung des Hinweises auf die Patenterteilung: **17.04.2024**
(21) Anmeldenummer: 20182058.6
(22) Anmeldetag: 24.06.2020
(51) Int. Cl.: B29B 9/06, B29B 7/42, B29B 7/58, B29B 7/74, B29B 7/82, B29C 48/00, B29C 48/04, B29C 48/05, B29C 48/345, B01J 2/20

(54) **GRANULIERVORRICHTUNGEN ZUR HERSTELLUNG VON GRANULAT AUS EINEM SCHMELZEFLUSS, SOWIE DARAUF BEZOGENE BETRIEBS- UND WARTUNGSVERFAHREN**
GRANULATING DEVICES FOR PRODUCING GRANULES FROM A MELT FLOW, AND CORRESPONDING METHODS OF OPERATION AND MAINTENANCE
DISPOSITIFS DE GRANULATION DESTINÉS À LA FABRICATION DE GRANULAT À PARTIR D'UN FLUX DE MASSE FONDUE, AINSI QUE PROCÉDÉS DE FONCTIONNEMENT ET DE MAINTENANCE ASSOCIÉS

(43) Veröffentlichungstag der Anmeldung: 29.12.2021
(73) Patentinhaber: Nordson Corporation, Westlake, OH 44145-1119 (US)
(72) Erfinder: Schnellbach, Nikolai, 48308 Senden (DE); Wöstmann, Stefan, 48336 Sassenberg (Füchtorf) (DE)
(74) Vertreter: Eisenführ Speiser

(56) Entgegenhaltungen:
- EP-A1- 3 308 920
- EP-A1- 3 549 738
- CN-A- 106 976 177
- CN-A- 111 469 300
- CN-B- 106 426 617
- CN-U- 206 812 267
- DE-A1- 10 234 229

## Beschreibung

Die Erfindung betrifft Granuliervorrichtungen und darauf bezogene Verfahren zur Herstellung von Granulat aus einem Schmelzefluss, mit einem Granulator, einer Schneidkammer, und einer Aufhängestruktur zum Aufhängen des Granulators und/oder der Schneidkammer, wobei die Aufhängestruktur einen ortfesten Abschnitt aufweist, und einen mit dem ortsfesten Abschnitt mittels eines Gelenks drehbeweglich um eine Drehachse verbundenen schwenkbaren Abschnitt.

Derartige Granuliervorrichtungen zur Herstellung von Granulat aus einem Schmelzfluss aus einem verflüssigtem Kunststoff sind aus dem Stand der Technik bekannt. Ihnen liegt das Funktionsprinzip zugrunde, dass einer Schneidkammer Schmelze, etwa in Form einer Vielzahl von Schmelzesträngen, zugeführt wird, wobei die Schmelze in der Schneidkammer sodann mittels Zuführung eines Fluides abgekühlt und mittels eines Granulators zerkleinert wird. Das betreffende Granulierverfahren wird auch als Unterwassergranulierung bezeichnet.

Insbesondere im Falle von Materialwechseln betreffend die Schmelze oder auch bei regulär durchzuführenden Wartungsarbeiten sind die einzelnen Komponenten einer Granuliervorrichtung voneinander zu trennen, beispielsweise der Granulator von der Schneidkammer.

Um dieses zu erleichtern, sind aus dem Stand der Technik Granuliervorrichtungen bekannt, bei denen der Granulator auf einem Schienensystem gegenüber einer ortsfest angeordneten Schneidkammer beweglich aufgenommen ist, und Granuliervorrichtungen, bei denen Granulator und/oder Schneidkammer an einer Tragstruktur hängend aufgenommen sind. Eine solche hängende Aufnahme eines Granulators ist beispielsweise aus EP 3 308 920 B1 bekannt. In dem betreffenden Dokument ist eine Aufhängung eines Granulators an einem Gelenkarm mit einer Mehrzahl von Schwenkgelenken offenbart, wobei der Gelenkarm an einer einzigen Aufhängungsbasis aufgenommen ist.

Aus DE 102 34 229 A1 ist eine Granuliervorrichtung bekannt. Um eine schnelle Demontage und Montage der Extruder-Schnecken zu gewährleisten, wird vorgeschlagen, dass die Granuliereinrichtung von der Siebeinrichtung abnehmbar, insbesondere verschwenkbar ausgebildet ist.

Nachteilig beim beschriebenen Stand der Technik wirkt sich aus, dass eine derartige Aufhängung an einer einzigen Aufhängungsbasis eine massive Dimensionierung der Elemente des Gelenkarmes erfordert, da aufgrund der typischerweise hohen Massen der Granulatoren große Momente über einen durch den Gelenkarm gebildeten Hebelarm in die Aufhängungsbasis eingeleitet werden. Eine derartige Vorrichtung eignet sich daher zumeist lediglich für kleinere und leichtere Granulatoren. Darüber hinaus erweist sich als nachteilig, dass lediglich der Granulator mittels der betreffenden Anordnung verschwenkt werden kann gegenüber den weiteren Komponenten der Granuliervorrichtung. Sollen weitere Komponenten der Granuliervorrichtung einer Wartung unterzogen werden, so vermag die vorbekannte Aufhängung hierbei keine Unterstützung zu leisten.

Vor diesem Hintergrund lag der Erfindung die Aufgabe zugrunde, eine Granuliervorrichtung der eingangs bezeichneten Art dahingehend weiterzubilden, dass die im Stand der Technik aufgefundenen Nachteile möglichst weitgehend behoben werden. Insbesondere ist eine Vorrichtung anzugeben, die eine hängende Aufnahme eines Granulators und/oder einer Schneidkammer erlaubt, gleichzeitig möglichst leicht und kostengünstig herzustellen ist, und sich darüber hinaus auch zur Aufhängung schwerer Granulatoren eignet.

Erfindungsgemäß wird die Aufgabe bei einer Granuliervorrichtung der eingangs genannten Art in einem ersten Aspekt durch die kennzeichnenden Merkmale des Anspruchs 1 gelöst.

Erfindungsgemäß weist der schwenkbare Abschnitt wenigstens eine im Wesentlichen horizontal verlaufende Laufschiene mit einer Längsachse auf, oder ist daraus ausgebildet, wobei die Laufschiene dazu eingerichtet ist, den Granulator entlang der Längsachse beweglich hängend aufzunehmen. Die Anordnung einer solchen Laufschiene an dem schwenkbaren Abschnitt ermöglicht in vorteilhafter Weise nicht nur eine Veränderung der Winkelstellung des Granulators relativ zu der Schneidkammer, sondern auch eine translatorische Bewegung des Granulators relativ zu der Schneidkammer. Mit anderen Worten ermöglicht die Anordnung den Granulator translatorisch von der Schneidkammer weg entlang der Laufschiene in Längsachsenrichtung zu bewegen, um somit die Zugänglichkeit sowohl der Schneidkammer als auch des Granulators zu Wartungszwecken, und dergleichen, zu verbessern.

Es hat sich ferner gezeigt, dass sich eine Abstützung des schwenkbaren Abschnittes mittels einer Stütze, die an einem distalen Ende des horizontalen Stützarms angeordnet ist, in vorteilhafter Weise dazu eignet, den schwenkbaren Abschnitt abzustützen, sodass dieser schwere Granulatoren hängend aufnehmen kann und sogleich möglichst kostengünstig und materialsparend dimensioniert werden kann. Eine derartige Granuliervorrichtung ermöglicht in vorteilhafter Weise ein Verschwenken des Granulators gegenüber der Schneidkammer, etwa zur Wartung der Komponenten oder zur Reinigung derselben bei einem Materialwechsel. Darüber hinaus wird die zum Betrieb einer derartigen Granuliervorrichtung in einer Herstellungsumgebung benötigte Bodenfläche minimiert.

Die Erfindung wird dadurch weitergebildet, dass die Stütze an ihrer Unterseite Rollen aufweist. Das Vorsehen derartiger Rollen hat sich als vorteilhaft erwiesen, um eine einfache Verschwenkbarkeit des schwenkbaren Abschnittes um die Drehachse zu ermöglichen. Dem Bediener ist es somit möglich, mit nur geringem Kraftaufwand den Granulator gegenüber der Schneidkammer zu verschwenken, etwa zu Wartungszwecken. Mittels der Rollen erfolgt die Abstützung in den Boden einer Fabrikhalle, auf dem die Granuliervorrichtung steht.

Gemäß einer bevorzugten Ausführungsform verläuft die Stütze im Wesentlichen vertikal. Eine solche Vertikalstütze ermöglicht bei geringem Materialaufwand die Aufnahme großer Kräfte und damit die Stützung auch schwerer Granulatoren. Gemäß einer alternativen Ausführungsform verläuft die Stütze gekrümmt oder schräg. Eine derartige Ausgestaltung der Stütze hat sich als vorteilhaft erwiesen insbesondere zur Umgehung lokaler Hindernisse.

Gemäß einer bevorzugten Ausführungsform ist der Stützarm durch wenigstens eine, insbesondere zwei Laufschienen ausgebildet. Die Masse des Stützarmes kann dadurch weiter reduziert werden, wobei eine Ausführungsform mit zwei Laufschienen eine besonders kippstabile Aufhängung des Granulators ermöglicht.

Gemäß einer bevorzugten Weiterbildung ist der Granulator in einer Tragstruktur aufgenommen, wobei die Tragstruktur reversibel mit der wenigstens einen Laufschiene verbindbar ist, und wenigstens ein Verstellmittel aufweist, welches dazu eingerichtet ist, eine vertikale Position des Granulators einzustellen. Auf diese Weise wird ermöglicht, die vertikale Position des Granulators mittels des Verstellmittels anzupassen an etwa die Position der Schneidkammer. Darüber hinaus kann eine betreffende Tragstruktur aufgrund der vorhandenen Einstellmöglichkeiten für eine Vielzahl von Granulator-Bautypen verwendet werden und sodann in Abhängigkeit von dem tatsächlich aufgenommenen Granulatortyp mittels der Verstellmittel an die übrigen Komponenten der Granuliervorrichtung in Bezug auf die vertikale Positionierung angepasst werden.

Gemäß einer weiteren bevorzugten Ausführungsform weist die Granuliervorrichtung einen mit der Schneidkammer fluidleitend gekoppelten Prozesswasserzulauf, und einen mit der Schneidkammer fluidleitend gekoppelten Prozesswasser- und Granulatablauf auf, wobei der Prozesswasserzulauf und der Prozesswasser- und Granulatablauf an dem ortsfesten Abschnitt der Aufhängestruktur angeordnet sind. Auf diese Weise wird eine sichere ortsfeste Aufnahme des Prozesswasserzulaufs sowie des Prozesswasser- und Granulatablaufs sichergestellt, wobei die Schneidkammer gleichzeitig derart reversibel koppelbar ist mit dem Prozesswasserzulauf sowie dem Prozesswasser- und Granulatablauf, dass eine Austauschbarkeit und Wartbarkeit der Schneidkammer sowie einer darin aufgenommenen Lochplatte erleichtert wird.

Gemäß einer vorteilhaften Weiterbildung der Erfindung gemäß des ersten Aspekts wird erfindungsgemäß vorgeschlagen, dass der ortsfeste Abschnitt der Aufhängestruktur wenigstens eine im Wesentlichen horizontal verlaufende zweite Laufschiene mit einer zweiten Längsachse aufweist, wobei die Granuliervorrichtung ferner ein fluidleitend mit der Schneidkammer gekoppeltes Anfahrventil aufweist, und wobei die zweite Laufschiene dazu eingerichtet ist, die Schneidkammer und/oder das Anfahrventil entlang der Längsachse beweglich zu tragen.

Die vorteilhafte Weiterbildung macht sich die Erkenntnis zunutze, dass bei aus dem Stand der Technik bekannten Granuliervorrichtungen eine Schneidkammer und/oder ein Anfahrventil, insbesondere dann wenn diese eine hohe Temperatur aufweisen, im Rahmen von Wartungs- und Reinigungsarbeiten nur unter größerem Aufwand zugänglich sind, wobei die erfindungsgemäße zweite Laufschiene auf vorteilhafte Weise ermöglicht, die Komponenten entlang der zweiten Längsachse der zweiten Laufschiene zu bewegen.

Gemäß einer bevorzugten Ausführungsform weist der ortsfeste Abschnitt der Aufhängestruktur zwei im Wesentlichen vertikale Stützen und einen die vertikalen Stützen verbindenden, im Wesentlichen horizontal verlaufenden Tragabschnitt auf, wobei die zweite Laufschiene an dem Tragabschnitt, insbesondere parallel zu dem Tragabschnitt verlaufend, angeordnet ist. Auf diese Weise wird die Gewichtskraft der Schneidkammer und/oder des Anfahrventils auf vorteilhafte Weise in die Tragstruktur eingeleitet und zugleich insgesamt ermöglicht, sowohl die Schneidkammer und das Anfahrventil als auch den Granulator derart durch Verschwenken oder translatorische Bewegung voneinander weg zu bewegen, dass ein mit dem Anfahrventil koppelbarer Extruder nach dem Wegbewegen der Komponenten voneinander zugänglich wird. Damit wird zugleich eine in dem Extruder verbaute sogenannte Extrusionsschnecke zugänglich und kann ausgetauscht beziehungsweise gewartet werden.

Weiterhin bevorzugt ist die zweite Laufschiene drehbeweglich um eine zweite Drehachse an dem ortsfesten Abschnitt der Aufhängestruktur angeordnet. Insoweit wird die Beweglichkeit von Schneidkammer und/oder Anfahrventil um einen weiteren Freiheitsgrad, nämlich einen rotatorischen Freiheitsgrad, erhöht, womit die Zugänglichkeit der Komponenten verbessert und deren Wartbarkeit weiter vereinfacht wird.

Gemäß einer bevorzugten Weiterbildung ist die Schneidkammer und/oder das Anfahrventil in einer Tragstruktur aufgenommen, wobei die Tragstruktur reversibel mit der zweiten Laufschiene verbindbar ist, und wenigstens ein Verstellmittel aufweist, welches dazu eingerichtet ist, eine vertikale Position der Schneidkammer und/oder des Anfahrventils einzustellen. Eine solche Tragstruktur ermöglicht eine einfache Bewegbarkeit des Anfahrventils und/oder der Schneidkammer, selbst dann, wenn diese Komponenten aufgeheizt sind, wobei das Verstellmittel gleichzeitig eine Anpassung der vertikalen Position der Schneidkammer und/oder des Anfahrventils, etwa bezogen auf den ortsfest angeordneten Prozesswasserzulauf und Prozesswasser- und Granulatablauf, ermöglicht. Darüber hinaus können thermische Ausdehnungsvorgänge einzelner Komponenten hierdurch kompensiert werden.

Gemäß eines zweiten Aspekts der Erfindung wird bei einer Granuliervorrichtung gemäß dem Oberbegriff des Anspruchs 7 erfindungsgemäß vorgeschlagen, dass die Schneidkammer eine erste Schneidkammer ist und die Granuliervorrichtung eine zusätzliche zweite Schneidkammer aufweist, wobei die erste und zweite Schneidkammer fluidleitend mit dem Anfahrventil gekoppelt sind, und der Granulator dazu eingerichtet ist, insbesondere durch Schwenken des schwenkbaren Abschnitts, mit der ersten Schneidkammer oder der zweiten Schneidkammer selektiv gekoppelt zu werden.

Der zweite Aspekt der Erfindung macht sich zur Lösung der Aufgabe die Erkenntnis zunutze, dass das Vorsehen einer zweiten Schneidkammer, welche fluidleitend mit dem Anfahrventil gekoppelt ist, auf vorteilhafte Weise dazu verwendet werden kann, die Rüstzeiten einer betreffenden Granuliervorrichtung zu minimieren, wobei gleichzeitig lediglich ein einziger Granulator zum Betrieb der Granuliervorrichtung vorzuhalten ist. Mit anderen Worten kann, wenn der Granulator im Betrieb mit der ersten Schneidkammer verbunden ist, die zweite Schneidkammer vorbereitet werden, insbesondere eine darin enthaltene Lochplatte vorgeheizt werden, und der Granulierbetrieb nahezu unterbrechungsfrei nach dem Wechsel des Granulators von der ersten Schneidkammer zu der zweiten Schneidkammer fortgesetzt werden. Langwierige Aufheiz- und Wartungszeiten entfallen beziehungsweise lassen sich deutlich minimieren.

Die Erfindung wird dadurch weitergebildet, dass das Anfahrventil als 4/3 Wegeventil ausgebildet ist. Gemäß einer bevorzugten Weiterbildung ist das 4/3 Wegeventil derart ausgebildet und eingerichtet, dass dieses eine fluidleitende Verbindung zu entweder der ersten oder der zweiten Schneidkammer bereitstellt.

Darüber hinaus ist bevorzugt, dass das Anfahrventil eine Mittelachse aufweist, wobei die Drehachse der Aufhängestruktur im Wesentlichen der Mittelachse entspricht. Diese Anordnung hat sich als vorteilhaft erwiesen, die Koppelbarkeit zwischen dem Granulator mit den Schneidkammern und dem Anfahrventil zu verbessern.

Eine alternativ bevorzugte Ausführungsform zeichnet sich dadurch aus, dass das Gelenk an der zweiten Laufschiene angeordnet ist, insbesondere an einer Oberseite der zweiten Laufschiene. Die betreffende Konfiguration hat sich als vorteilhaft erwiesen zur Ermöglichung der gewünschten Verschwenkbarkeit des Granulators relativ zu dem Anfahrventil sowie der wenigstens einen mit dieser gekoppelten Schneidkammer.

Die Erfindung wird dadurch weitergebildet, dass die erste Schneidkammer und die zweite Schneidkammer mit einem gemeinsamen Prozesswasserzulauf und/oder Prozesswasser- und Granulatablauf gekoppelt sind. Hierdurch wird erreicht, dass vor- bzw. nachgelagerte Komponenten des Prozesswasserzulaufs und/oder Prozesswasser- und Granulatablaufs lediglich einmal vorzuhalten sind, wodurch die Komplexität der Granuliervorrichtung reduziert wird und Kosten eingespart werden können.

Weiterhin bevorzugt weist die Schneidkammer eine erste Querachse auf und die zweite Schneidkammer eine zweite Querachse, wobei die erste Schneidkammer relativ zu der zweiten Schneidkammer derart angeordnet ist, dass die erste Querachse zu der zweiten Querachse einen Winkel von 75 Grad bis 135 Grad, insbesondere 90 Grad, einnimmt. Der beschriebene Winkelbereich hat sich als besonders geeignet erwiesen, um sicherzustellen, dass der Granulator mit den Schneidkammern auf optimale Weise gekoppelt werden kann, wobei eine betreffende zu wartende Schneidkammer auch dann noch gut zugänglich ist, wenn der Granulator mit der jeweils anderen Schneidkammer gekoppelt ist.

Die Erfindung ist vorstehend unter Bezugnahme auf eine Granuliervorrichtung beschrieben worden. In einem weiteren Aspekt betrifft die Erfindung ein Verfahren nach Anspruch 14 zum Betrieb einer Granuliervorrichtung nach einem der Ansprüche 7-10.

Die Erfindung löst die eingangs bezeichneten Aufgabe in Bezug auf das Betriebsverfahren mit den Schritten: Bereitstellen einer ersten Schneidkammer und einer zweiten Schneidkammer, wobei die Schneidkammern jeweils eine beheizbare Lochplatte aufweisen, Bereitstellen eines schwenkbar zu den Schneidkammern angeordneten Granulators, Kopplung des Granulators mit der ersten Schneidkammer und Erzeugung von Granulat, Vorheizen der Lochplatte der zweiten Schneidkammer während der Erzeugung von Granulat in der ersten Schneidkammer, und schwenken des Granulators von der ersten Schneidkammer zu der zweiten Schneidkammer nach Beendigung des Vorheizens der Lochplatte der zweiten Schneidkammer.

Das Betriebsverfahren macht sich die gleichen Vorteile zunutze wie die erfindungsgemäße Granuliervorrichtung. Diesbezüglich wird auf die obigen Ausführungen verwiesen und deren Inhalt hiermit einbezogen.

Zusammengefasst liegt dem erfindungsgemäßen Betriebsverfahren die Erkenntnis zugrunde, dass die zweite Schneidkammer auf vorteilhafte Weise dazu genutzt werden kann, Rüstzeiten zu reduzieren, in dem die jeweils nicht mit dem Granulator gekoppelte Schneidkammer für den Granulierbetrieb vorbereitet wird, etwa vorgeheizt und/oder gewartet wird. Nicht-produktive Rüstzeiten lassen sich hierdurch minimieren.

Darüber hinaus ist bevorzugt, dass das Verfahren weiterhin die Schritte aufweist: Bereitstellen eines Anfahrventils, welches fluidleitend mit der ersten Schneidkammer und der zweiten Schneidkammer verbunden ist, wobei das Anfahrventil eine Bodenstellung aufweist, bei der keiner der Schneidkammern Schmelze zugeführt wird, eine erste Produktionsstellung, in der ausschließlich der ersten Schneidkammer Schmelze zugeführt wird, und eine zweite Produktionsstellung, in der ausschließlich der zweiten Schneidkammer Schmelze zugeführt wird, Umschalten des Anfahrventils in die Bodenstellung vor dem Schwenken des Granulators von der ersten Schneidkammer zu der zweiten Schneidkammer, Umschalten des Anfahrventils in die zweite Produktionsstellung, nach dem Schwenken des Granulators von der ersten Schneidkammer zu der zweiten Schneidkammer. Die Verwendung eines Anfahrventils, welches eine Bodenstellung sowie eine erste und zweite Produktionsstellung aufweist auf die oben bezeichnete Art hat sich als vorteilhaft herausgestellt, zur Unterstützung des Betriebswechselvorganges von der ersten Schneidkammer zu der zweiten Schneidkammer.

Die Erfindung ist vorstehend unter Bezugnahme auf ein Betriebsverfahren beschrieben worden. In einem weiteren Aspekt betrifft die Erfindung ein Verfahren nach Anspruch 11 zur

Wartung einer Granuliervorrichtung nach einem der Ansprüche 1-6, wobei die Granuliervorrichtung ferner einen Extruder aufweist.

Die Erfindung löst die eingangs bezeichneten Aufgabe in Bezug auf das Wartungsverfahren mit den Schritten: Bereitstellen eines schwenkbar zu dem Extruder angeordneten Granulators, Bereitstellen einer beweglich zu dem Extruder aufgehängten Schneidkammer, wobei der Extruder mit der Schneidkammer und dem Granulator in einer Produktionskonfiguration gekoppelt ist, Wegschwenken des Granulators von der Schneidkammer, Wegbewegen der Schneidkammer von dem Extruder, Warten des Extruders, insbesondere entfernen und warten einer Extrusionsschnecke des Extruders.

Die Erfindung wird dadurch weitergebildet, dass das Verfahren in Bezug auf den Schritt des Wegbewegens der Schneidkammer von dem Extruder den Schritt umfasst: Wegbewegen eines mit der Schneidkammer gekoppelten Ventils, insbesondere eines Anfahrventils.

Gemäß einer bevorzugten Ausführungsform weist das Verfahren weiterhin den Schritt auf:
Warten der Schneidkammer, insbesondere reinigen der Schneidkammer und/oder wechseln einer Lochplatte der Schneidkammer.

Das Wartungsverfahren macht sich die gleichen Vorteile zunutze wie die erfindungsgemäße Granuliervorrichtung. Diesbezüglich wird auf die obigen Ausführungen verwiesen und deren Inhalt hier mit einbezogen.

Weitere Merkmale und Vorteile der Erfindung ergeben sich aus dem beigefügten Ansprüchen und der nachfolgenden Beschreibung, in der Ausführungsbeispiele anhand schematischer Zeichnungen im Einzelnen erläutert werden.

Im Einzelnen zeigen:
- Fig. 1: ein erstes Ausführungsbeispiel einer erfindungsgemäßen Granuliervorrichtung in einer perspektivischen Ansicht;
- Fig. 2: das Ausführungsbeispiel der erfindungsgemäßen Granuliervorrichtung gemäß Fig. 1 in einer Draufsicht;
- Fig. 3: das Ausführungsbeispiel der erfindungsgemäßen Granuliervorrichtung gemäß den Fig. 1 und 2 in einer Seitenansicht;
- Fig. 4-6: das Ausführungsbeispiel der erfindungsgemäßen Granuliervorrichtung gemäß den Fig. 1-3 in perspektivischen Ansichten in unterschiedlichen Betriebspositionen;
- Fig. 7: das Ausführungsbeispiel der erfindungsgemäßen Granuliervorrichtung gemäß den Fig. 1-6 in einer Wartungsposition in einer Seitenansicht;
- Fig. 8-10: ein zweites Ausführungsbeispiel einer erfindungsgemäßen Granuliervorrichtung in verschiedenen Ansichten und Betriebszuständen;
- Fig. 11: einen Ventilbolzen einer erfindungsgemäßen Granuliervorrichtung gemäß den Fig. 8-10 in einer semi-transparenten Darstellung;
- Fig. 12-14: ein Anfahrventil einer erfindungsgemäßen Granuliervorrichtung gemäß dem in den Fig. 7-10 gezeigten Ausführungsbeispiel in unterschiedlichen Betriebszuständen.

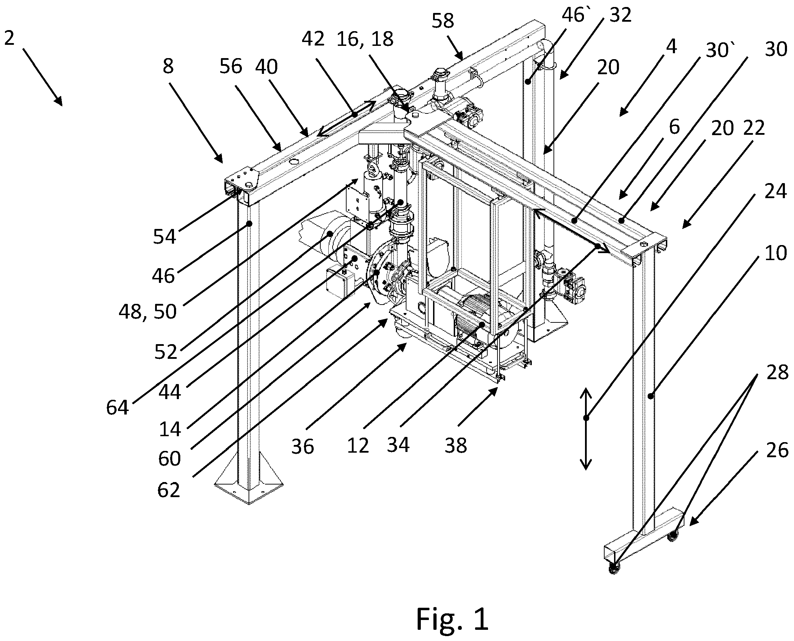

Fig. 1 zeigt eine Granuliervorrichtung 2 zur Herstellung von Granulat aus einem Schmelzefluss. Die Granuliervorrichtung 2 weist einen Granulator 12, eine Schneidkammer 14 sowie eine Aufhängestruktur 4 zum Aufhängen des Granulators 12 auf. Die Aufhängestruktur 4 weist einen ortsfesten Abschnitt 8 sowie einen schwenkbaren Abschnitt 6 auf. Der schwenkbare Abschnitt 6 ist mit dem ortsfesten Abschnitt 8 mittels eines Gelenkes 16 drehbeweglich um eine Drehachse 18 verbunden. Der schwenkbare Abschnitt 6 weist einen im Wesentlichen horizontalen Stützarm 20 auf. Der horizontale Stützarm 20 erstreckt sich ausgehend von der Drehachse 18 und weist ein distales Ende 22 auf. Im Bereich des distalen Endes 22 ist an dem schwenkbaren Abschnitt 6 eine Stütze 10 angeordnet. Die Stütze 10 stützt den schwenkbaren Abschnitt 6 in einer Vertikalrichtung 24 ab.

Die Stütze 10 weist an ihrer Unterseite 26 Rollen 28 auf. Die Rollen 28 stehen im Betrieb in Kontakt mit einem Untergrund, auf welchem die Granuliervorrichtung 2 angeordnet ist (nicht gezeigt) und ermöglichen ein leichtgängiges Verschwenken des schwenkbaren Abschnittes 6.

Die Stütze 10 verläuft im Wesentlichen vertikal. Der schwenkbare Abschnitt 6 weist zwei horizontal verlaufende Laufschienen 30, 30' auf, welche eine Längsachse 34 aufweisen. Im vorliegenden Fall ist der Stützarm 20 durch die zwei Laufschienen 30, 30' ausgebildet. Die Laufschienen 30, 30' sind dazu eingerichtet, den Granulator 12 entlang der Längsachse 34 beweglich hängend aufzunehmen.

Zu diesem Zweck ist der Granulator 12 in einer Tragstruktur 36 aufgenommen. Die Tragstruktur 36 ist reversibel mit den Laufschienen 30, 30' verbindbar. Die Tragstruktur 36 weist Verstellmittel 38 auf, welche dazu eingerichtet sind, eine vertikale Position des Granulators 12 bezogen auf die Vertikalrichtung 24 einzustellen. Der Granulator 12 kann damit zu den weiteren Komponenten der Granuliervorrichtung 2, etwa der Schneidkammer 14, ausgerichtet werden.

Die Granuliervorrichtung 2 weist ferner einen mit der Schneidkammer 14 fluidleitend gekoppelten Prozesswasserzulauf 62 und einen mit der Schneidkammer 14 fluidleitend gekoppelten Prozesswasser- und Granulatablauf 64 auf. Der Prozesswasserzulauf 62 und der Prozesswasser- und Granulatablauf 64 sind Teil einer Bypassanordnung 32. Der Prozesswasserzulauf 62 und der Prozesswasser- und Granulatablauf 64 sind an dem ortsfesten Abschnitt 8 des Aufhängestruktur 4 angeordnet. In der Schneidkammer 14 ist eine Lochplatte 60 aufgenommen.

Der ortsfeste Abschnitt 8 der Aufhängestruktur 4 weist eine im Wesentlichen horizontal verlaufende zweite Laufschiene 40 auf. Die zweite Laufschiene 40 weist eine zweite Längsachse 42 auf. Ferner weist die Granuliervorrichtung 2 ein fluidleitend mit der Schneidkammer 14 gekoppeltes Anfahrventil 44 auf. Die zweite Laufschiene 40 ist dazu eingerichtet, die Schneidkammer 14 und das Anfahrventil 44 entlang der Längsachse 42 beweglich zu tragen. Die zweite Laufschiene 40 ist drehbeweglich um eine zweite Drehachse 54 an dem ortsfesten Abschnitt 8 der Aufhängestruktur 4 angeordnet. Die Schneidkammer 14 und das Anfahrventil 44 sind in einer Tragstruktur 48 aufgenommen. Die Tragstruktur 48 ist reversibel mit der zweiten Laufschiene 40 verbindbar. Die Tragstruktur 48 weist ein Verstellmittel 50 auf. Das Verstellmittel 50 ist dazu eingerichtet, eine vertikale Position der Schneidkammer 14 und des Anfahrventils 44 einzustellen, entlang insbesondere der Vertikalrichtung 24.

Der ortsfeste Abschnitt 8 der Aufhängestruktur 4 weist zwei im Wesentlichen vertikale Stützen 46, 46' und einen die vertikalen Stützen 46, 46' verbindenden Tragabschnitt 58 auf. Der Tragabschnitt 58 ist im Wesentlichen horizontal angeordnet. Die zweite Laufschiene 40 ist an dem Tragabschnitt 58, insbesondere parallel zu dem Tragabschnitt 58 verlaufend, angeordnet. Die Granuliervorrichtung 2 weist ferner ein Extruder 52 auf, der im Betrieb mit dem Anfahrventil 44 gekoppelt ist.

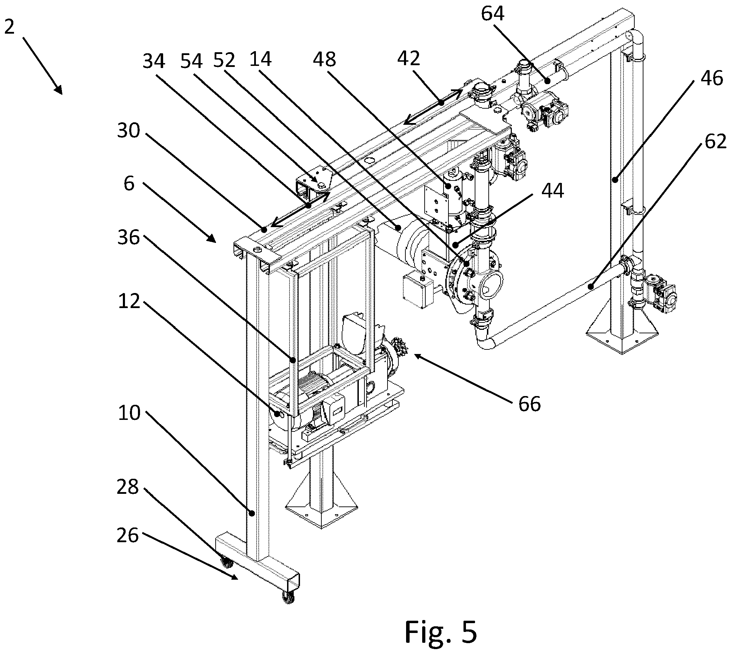

In dem in Figur 1 gezeigten Zustand, befindet sich die Granuliervorrichtung 2 in einer Produktionskonfiguration, bei der der Extruder 52 gekoppelt ist mit dem Anfahrventil 44 und der Schneidkammer 14. Die Schneidkammer 14 wiederrum ist gekoppelt mit dem Granulator 12. Zu extrudierendes Material wird in dem Extruder 52 extrudiert, der Schneidkammer 14 zugeführt und in der Schneidkammer 14 mittels des über den Prozesswasserzulauf 62 zugeführten Prozesswassers abgekühlt. Ferner wird die Schmelze während des Abkühlens geschnitten, insbesondere mittels einer Schneideinheit 66 (vgl. Fig. 5) des Granulators 12. Ein Gemisch aus Granulat und Prozesswasser verlässt die Schneidkammer 14 sodann über den Prozesswasser- und Granulatablauf 64.

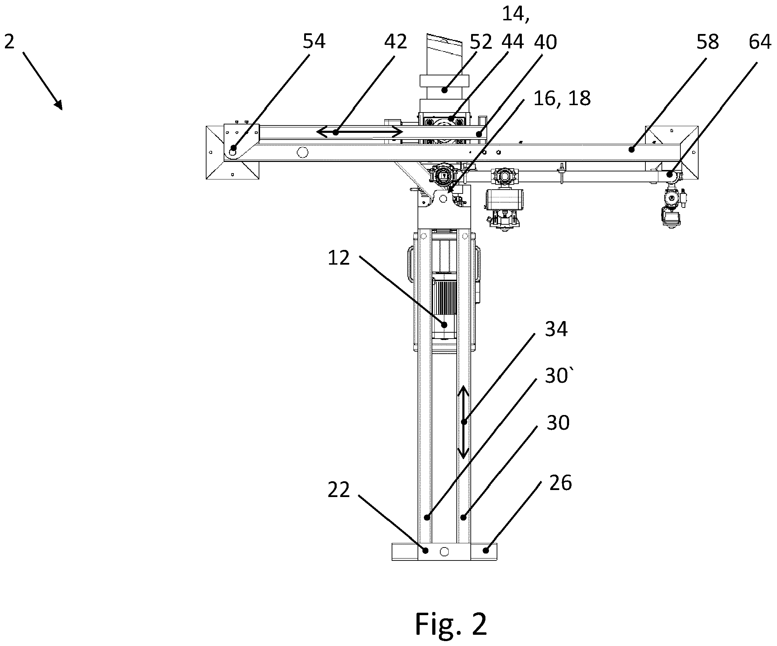

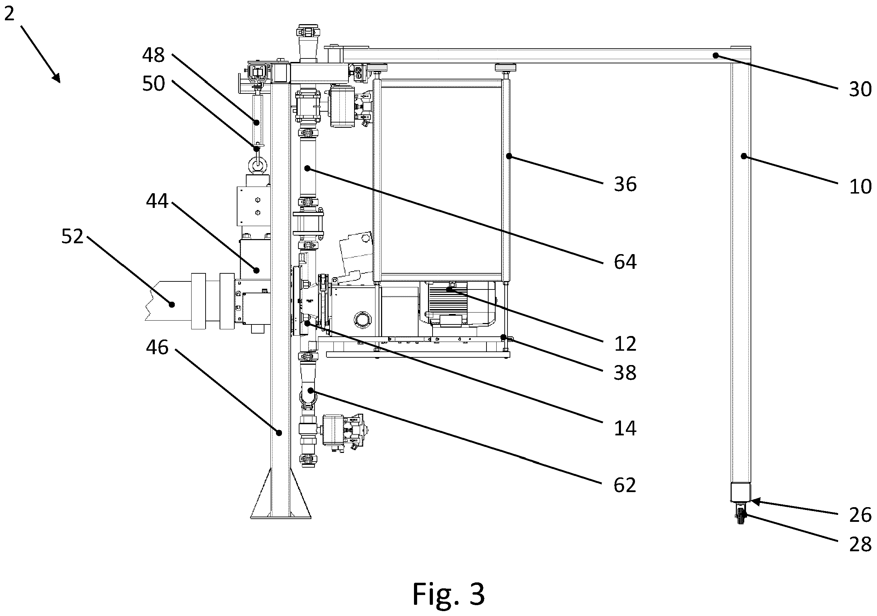

Eine Draufsicht auf die Granuliervorrichtung 2 ist in Fig. 2 gezeigt. Die Granuliervorrichtung 2 befindet sich auch hier in der Produktionskonfiguration. Wie in Fig. 2 zu erkennen ist, kann der Granulator 12 um die Drehachse 18 verschwenkt werden, und entlang der Längsachse 34 der Laufschienen 30, 30' translatorisch in Richtung des distalen Endes 22 bewegt werden. Schneidkammer 14 und Anfahrventil 44, wiederrum, lassen sich mithilfe der zweiten Laufschiene 40 entlang der Längsachse 42 bewegen, wie in den nachfolgenden Figuren verdeutlicht. Fig. 3 zeigt eine Seitenansicht der Granuliervorrichtung 2 in der in den Fig. 1 und 2 dargestellten Produktionskonfiguration.

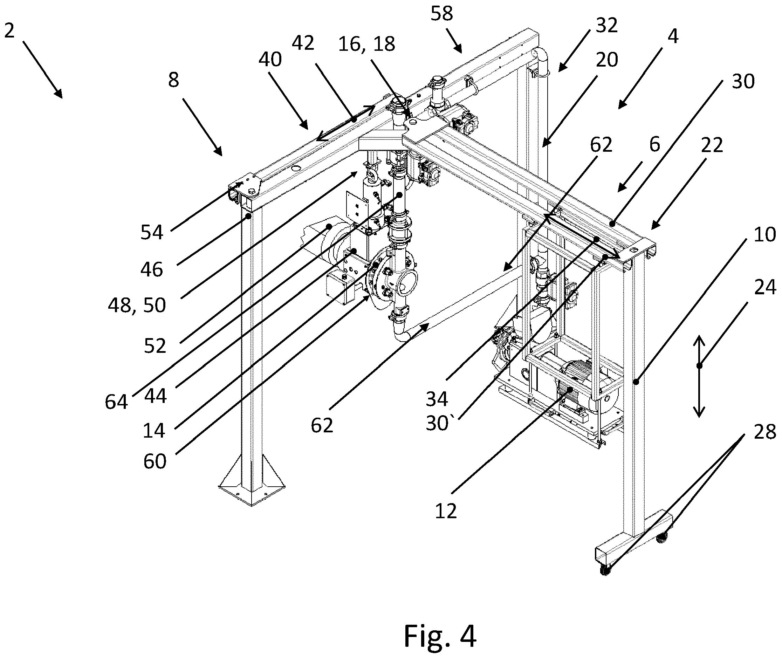

Fig. 4 zeigt die Granuliervorrichtung 2 in einer Wartungskonfiguration. Im Vergleich zu dem in den Fig. 1 und 3 gezeigten Zustand ist der Granulator 12 nunmehr entlang der Längsachse 34 der Laufschienen 30, 30' in Richtung des distalen Endes 22 bewegt worden. Die Schneidkammer 14 inklusive einer in der Schneidkammer 14 angeordneten beheizbaren Lochplatte 60 wird nunmehr zugänglich, zu Reinigungszwecken, oder zum Austausch der beheizbaren Lochplatte 60.

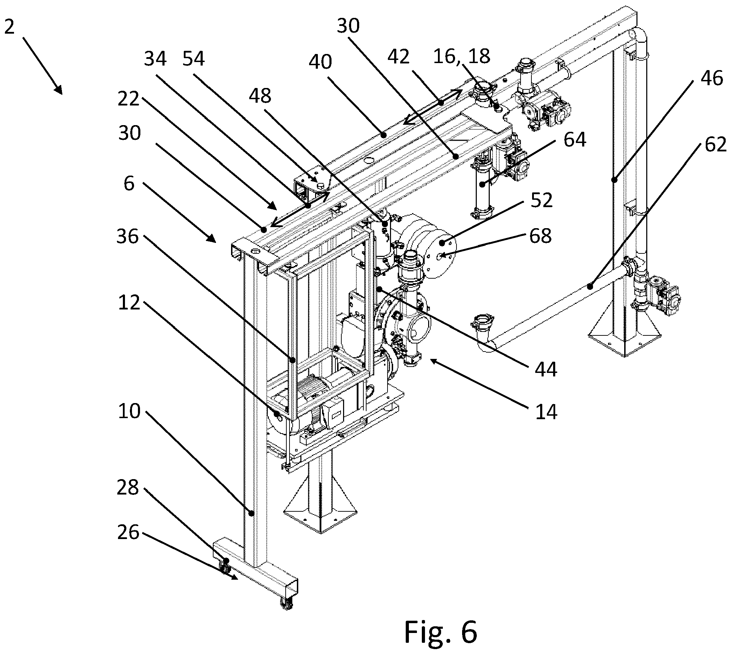

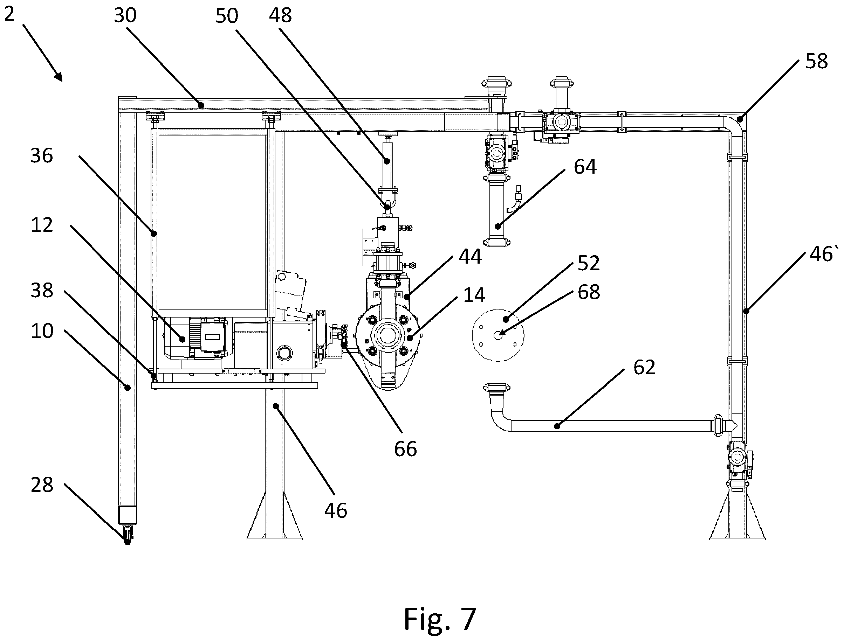

Zur weiteren Verbesserung der Zugänglichkeit der Schneidkammer 14 und der weiteren Komponenten, kann der schwenkbare Abschnitt 6 verschwenkt werden, etwa in die in der Fig. 5 dargestellte Richtung. In Fig. 6 ist ein Betriebszustand gezeigt, bei dem nicht nur der Granulator 12 translatorisch in Richtung des distalen Endes 22 verschoben und der schwenkbare Abschnitt 6 als solcher verschwenkt wurde, sondern darüber hinaus auch das Anfahrventil 44 mittels der Tragstruktur 48 entlang der Längsachse 42 der zweiten Laufschiene 40 translatorisch bewegt wurde. Damit wird nicht nur die Schneidkammer 14 für Wartungsarbeiten zugänglich, sondern insbesondere auch der Extruder 52. Der Extruder 52 weist eine Extrusionsschnecke 68 auf, die in regelmäßigen Abständen zu reinigen und/oder auszutauschen ist. In der in der Fig. 6 gezeigten Konfiguration der Granuliervorrichtung 2 ist es nun möglich, direkten Zugang zu erhalten zu dem Extruder 52, und beispielsweise die Extrusionsschnecke 68 zu warten oder zu entfernen (sogenanntes "Ziehen" der Extrusionsschnecke 68). Der in der Fig. 6 gezeigte Betriebszustand ist in der Fig. 7 in einer Seitenansicht gezeigt, wobei aus der Fig. 7 in besonderer Weise die vorteilhafte Zugänglichkeit der einzelnen Komponenten der Granuliervorrichtung 2, insbesondere des Extruders 52, der Schneidkammer 14 sowie des Granulators 12 deutlich wird.

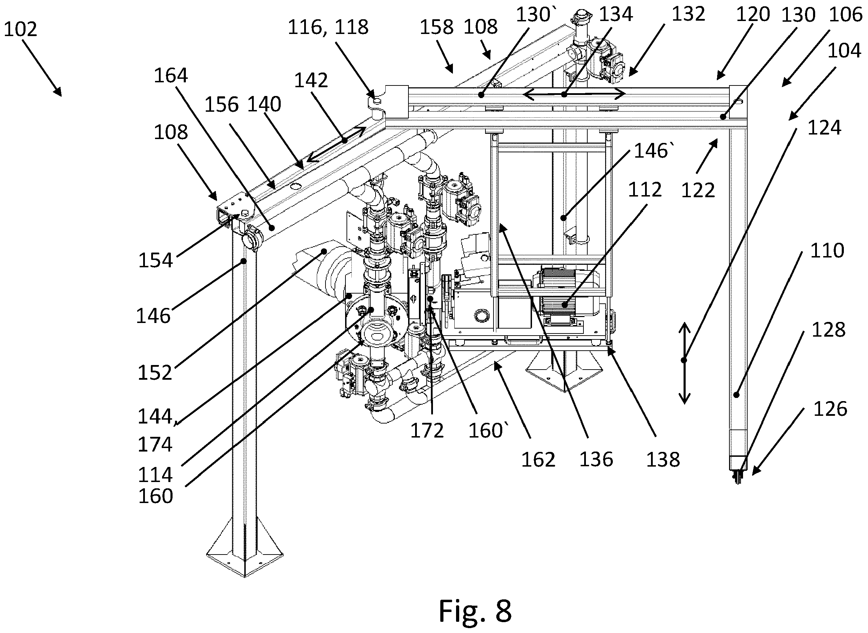

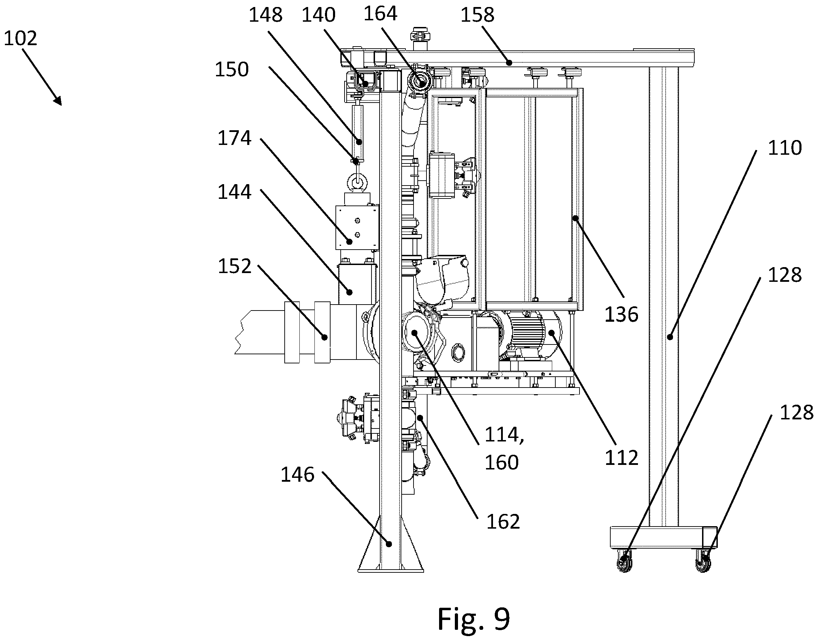

Die Fig. 8 und 9 zeigen ein zweites Ausführungsbeispiel einer erfindungsgemäßen Granuliervorrichtung 102 in einer perspektivischen Ansicht (Fig. 8) sowie einer Seitenansicht (Fig. 9).

Fig. 8 zeigt eine Granuliervorrichtung 102 zur Herstellung von Granulat aus einem Schmelzefluss. Die Granuliervorrichtung 102 weist einen Granulator 112 sowie eine Schneidkammer 114 auf, die vorliegend eine erste Schneidkammer 114 ist. Die Granuliervorrichtung 102 weist darüber hinaus eine zweite Schneidkammer 172 auf. Die Granuliervorrichtung 102 weist eine Aufhängestruktur 104 zum Aufhängen des Granulators 112 auf. Die Aufhängestruktur 104 weist einen ortsfesten Abschnitt 108 auf. Darüber hinaus weist die Aufhängestruktur 104 einen schwenkbaren Abschnitt 106 auf, der mit dem ortsfesten Abschnitt 108 mittels eines Gelenks 116 drehbeweglich um eine Drehachse 118 verbunden ist. Der schwenkbare Abschnitt 106 weist einen im Wesentlichen horizontalen Stützarm 120 auf, der sich ausgehend von der Drehachse 118 erstreckt und ein distales Ende 122 aufweist. Im Bereich des distalen Endes 122 weist der schwenkbare Abschnitt 106 eine Stütze 110 auf. Die Stütze 110 ist dazu eingerichtet, den schwenkbaren Abschnitt 106 in einer Vertikalrichtung 124 abzustützen.

Die Stütze 110 weist an ihrer Unterseite 126 Rollen 128 auf. Die Stütze 110 verläuft im Wesentlichen vertikal. Der schwenkbare Abschnitt 106 weist zwei im Wesentlichen horizontal verlaufende Laufschienen 130, 130` auf, die ihrerseits eine Längsachse 134 aufweisen. Die Laufschienen 130, 130` sind dazu eingerichtet, den Granulator 112 entlang der Längsachse 134 beweglich aufzunehmen. Vorliegend ist der Stützarm 120 durch zwei Laufschienen 130, 130` ausgebildet.

Der Granulator 120 ist in einer Tragstruktur 136 aufgenommen, wobei die Tragstruktur 136 reversibel mit den Laufschienen 130, 130' verbunden ist. Die Tragstruktur 136 weist darüber hinaus ein Verstellmittel 138 auf, welches dazu eingerichtet ist, eine vertikale Position des Granulators 120 entlang der Achse 124 einzustellen.

Der ortsfeste Abschnitt 108 der Aufhängestruktur 104 weist eine horizontal verlaufende zweite Laufschiene 140 mit einer Längsachse 142 auf. Darüber hinaus weist die Granuliervorrichtung 102 ein fluidleitend mit der ersten Schneidkammer 114 und der zweiten Schneidkammer 172 gekoppeltes Anfahrventil 144 auf. Die zweite Laufschiene 140 ist dazu eingerichtet, die Schneidkammer 114 mit der Schneidkammer 172 und das Anfahrventil 144 entlang der Längsachse 142 beweglich zu tragen.

Der ortsfeste Abschnitt 108 der Aufhängestruktur 104 weist zwei im Wesentlichen vertikale Stützen 146, 146' auf. Die vertikalen Stützen 146, 146' verbindet eine im Wesentlichen horizontal verlaufender Tragabschnitt 158. Die zweite Laufschiene 140 ist an dem Tragabschnitt 158, insbesondere parallel zu dem Tragabschnitt 158 verlaufend, angeordnet. Die zweite Laufschiene 140 ist drehbeweglich um eine zweite Drehachse 154 an dem ortsfesten Abschnitt 108 der Aufhängestruktur 104 angeordnet.

Wie insbesondere unter Bezugnahme auf Fig. 9 erkennbar ist, ist das Anfahrventil 144 in einer Tragstruktur 148 aufgenommen. Die Tragstruktur 148 ist reversibel mit der zweiten Laufschiene 140 verbindbar. Die Tragstruktur 148 weist wenigstens ein Verstellmittel 150 auf. Das Verstellmittel 150 ist dazu eingerichtet, eine vertikale Position des Anfahrventils 144 einzustellen.

Wie unter Bezugnahme auf die Fig. 8-10 gezeigt ist, ist der Granulator 112 mittels der Aufhängestruktur 104 dazu eingerichtet, insbesondere durch schwenken des schwenkbaren Abschnitts 106, mit der ersten Schneidkammer 114 oder der zweiten Schneidkammer 172 selektiv gekoppelt zu werden. Während der Granulator 112 mit einer der Schneidkammern 114, 172 gekoppelt ist und Granulat erzeugt, kann die jeweils nicht verwendete Schneidkammer 114, 172 gewartet, gereinigt, oder vorbereitet werden, insbesondere dergestalt, dass eine im der Schneidkammer 114, 172 angeordnete beheizbare Lochplatte 160, 160' vorgeheizt wird.

Das Anfahrventil 144 ist als 4/3 Wegeventil 174 ausgebildet. Das 4/3 Wegeventil 174 ist derart ausgebildet und eingerichtet, dass selbiges eine fluidleitende Verbindung zu entweder der ersten Schneidkammer 114 oder der zweiten Schneidkammer 172 bereitstellt. Auf diese Weise wird Fluid jeweils lediglich einer der Schneidkammern 114, 172 zugeführt, nämlich gerade der Schneidkammer 114, 172, die mit dem Granulator 112 gekoppelt ist.

Das Gelenk 116 ist an der zweiten Laufschiene 140 angeordnet, insbesondere an einer Oberseite 156 der zweiten Laufschiene 140. Ferner sind die erste Schneidkammer 114 und die zweite Schneidkammer 172 mit einem gemeinsamen Prozesswasserzulauf 162 und/oder Prozesswasser- und Granulatablauf 164 gekoppelt. Der Prozesswasserzulauf 162 und der Prozesswasser- und Granulatablauf 164 sind Teil einer Bypassanordnung 132. Das Anfahrventil 144 ist mit einem Extruder 152 gekoppelt.

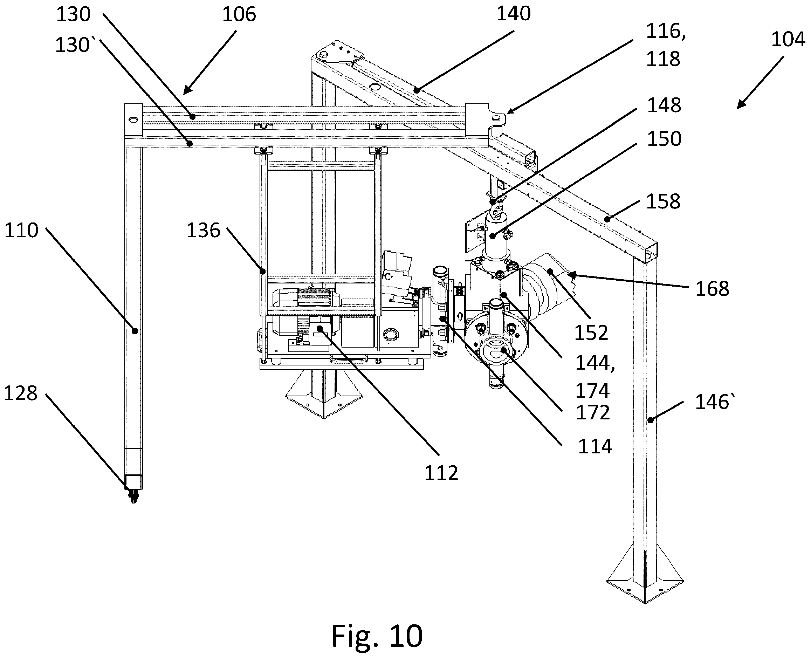

Unter Bezugnahme auf Fig. 8 ist der Granulator 112 nunmehr mit der zweiten Schneidkammer 172 gekoppelt. Zur Kopplung des Granulators mit der ersten Schneidkammer 114 wird der Granulator 112 zunächst translatorisch in Richtung des distalen Endes 122 entlang der Längsachse 134 der Laufschienen 130, 130' bewegt. Anschließend wird der schwenkbare Abschnitt 106 derart verschwenkt, dass der Granulator 112 mit der ersten Schneidkammer 114 fluchtet. Danach kann der Granulator 112 erneut translatorisch entlang der Längsachse 134 der Laufschienen 130, 130' in Richtung der ersten Schneidkammer 114 beweget werden und mit dieser gekoppelt werden. Im Ergebnis befindet sich die Granuliervorrichtung 102 sodann in dem in der Fig. 10 gezeigten Betriebszustand.

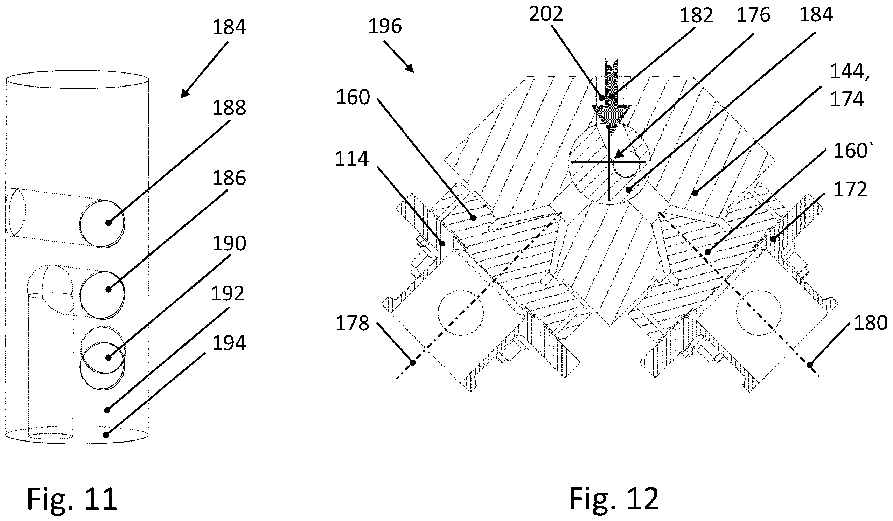

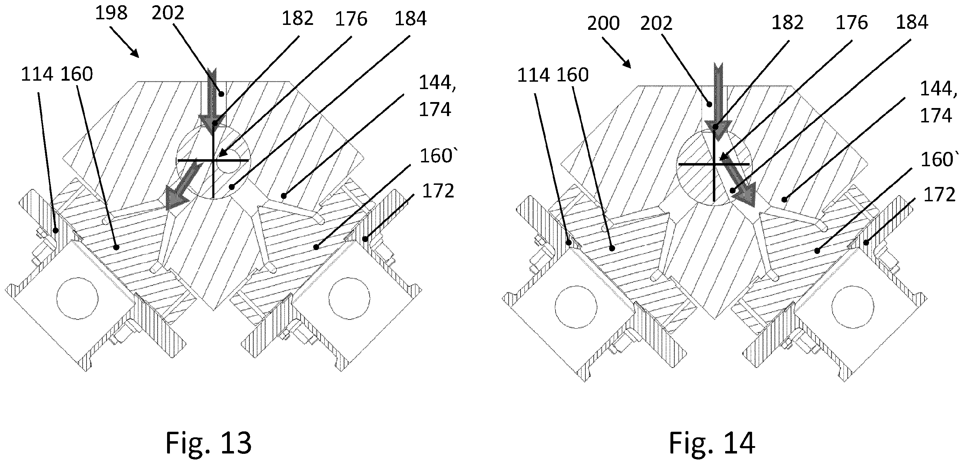

Die Fig. 11-14 veranschaulichen den Aufbau und die Verschaltung des Anfahrventils 144 sowie eines darin aufgenommenen Ventilbolzens 184. Unter Bezugnahme auf Fig. 11 weist der Ventilbolzen 184 insgesamt drei Strömungskanäle 186, 188, 190 auf. Alle drei Strömungskanäle 186, 188, 190 erstrecken sich ausgehend von einer Mantelfläche 192 in den Ventilbolzen 184 hinein. Der Strömungskanal 186 korrespondiert mit einer Bodenstellung 196 des 4/3 Wegeventils 174. Der Strömungskanal erstreckt sich zu diesem Zweck ausgehend von der Mantelfläche 192 hin zu einer Stirnfläche 194 des Ventilbolzens 184. Die übrigen Strömungskanäle 188 sowie 190 entsprechen jeweils einer ersten Produktionsstellung 198 (vgl. Fig. 13) sowie einer zweiten Produktionsstellung 200 (vgl. Fig. 14) und erstrecken sich ausgehend von der Mantelfläche 192 in den Ventilbolzen 184 hinein und verlassen selbigen erneut über die Mantelfläche 192.

In Bezug auf die in Fig. 11 gezeigte Ausrichtung des Ventilbolzens 184 erfolgt eine Verschiebung desselben in Vertikalrichtung in dem 4/3 Wegeventil 174. Diese Vertikalrichtung in Bezug auf Fig. 11 entspricht in den Fig. 12-14 der Zeichnungsebene. Mit anderen Worten führt eine Bewegung des Ventilbolzens 184 relativ zu der in den Figuren 12-14 gezeigten Zeichnungsebene dazu, dass ein Schmelzefluss 182 entweder keiner der beheizbaren Düsenplatten 160, 160' zugeführt wird (Bodenstellung 196), oder aber einer der beheizbaren Düsenplatten 160, 160' zugeführt wird, wenn der Schmelzeeinlass 182 in Kontakt gebracht wird mit entweder dem Strömungskanal 188 für die erste Produktionsstellung 198 oder dem Strömungskanal 190 für die zweite Produktionsstellung 200 durch eine Bewegung des Ventilbolzens 184 in Zeichnungsebene.

In dem in Fig. 12 gezeigten Zustand befindet sich das 4/3 Wegeventil 174 in der Bodenstellung 196. Der ersten beheizbaren Lochplatte 160 und der zweiten beheizbaren Lochplatte 160` wird keine Schmelze 182 ausgehend von einem Schmelzeeinlass 202 zugeführt. Somit wird auch der ersten Schneidkammer 114 und der zweiten Schneidkammer 172 keine Schmelze 182 zugeführt.

Wie ebenfalls Fig. 12 zu entnehmen ist, weist das Anfahrventil 144 eine Mittelachse 176 auf. Die Drehachse 118 der Aufhängestruktur 104 (vgl. beispielsweise Fig. 8) entspricht im Wesentlichen der Mittelachse 176. Darüber hinaus weist die erste Schneidkammer 114 eine Querachse 178 auf und die zweite Schneidkammer 172 eine Querachse 180. Die Schneidkammer 114 ist relativ zu der zweiten Schneidkammer 172 derart angeordnet, dass die Querachse 178 zu der zweiten Querachse 180 einen Winkel von 90 Grad einnimmt.

In dem in der Fig. 13 gezeigten Zustand befindet sich das 4/3 Wegeventil 174 beziehungsweise das Anfahrventil 144 in der ersten Produktionsstellung 198, in welcher lediglich der ersten Schneidkammer 114 und der beheizbaren Düsenplatte 160 Schmelze zugeführt wird.

In dem in der Fig. 14 gezeigten Zustand befindet sich das 4/3 Wegeventil 174 beziehungsweise das Anfahrventil 144 in der zweiten Produktionsstellung 200, in welcher jeweils lediglich der zweiten Schneidkammer 172 beziehungsweise der beheizbaren Düsenplatte 160` Schmelze zugeführt wird. Ein Wechsel aus der Bodenstellung 196 in die erste Produktionsstellung 198 und die zweite Produktionsstellung 200 erfolgt durch bewegen des Ventilbolzens 184 in Zeichnungsebene der Fig. 12-14 translatorisch relativ zu dem Schmelzeeinlass 200.

Im Betrieb bzw. auch zur Vorbereitung des Betriebs- oder Weiterbetriebs der Granuliervorrichtungen kommen folgende Schritte zur Anwendung:
- Bereitstellen einer ersten Schneidkammer 114 und einer zweiten Schneidkammer 172, wobei die Schneidkammern 114, 172 jeweils eine beheizbare Lochplatte 160, 160' aufweisen;
- Bereitstellen eines schwenkbar zu den Schneidkammern 114, 172 angeordneten Granulators 112;
- Kopplung des Granulators 112 mit der ersten Schneidkammer 114 und Erzeugung von Granulat;
- Vorheizen der Lochplatte 160' der zweiten Schneidkammer 172 während der Erzeugung von Granulat in der ersten Schneidkammer 114;
- Schwenken des Granulators 112 von der ersten Schneidkammer 172 zu der zweiten Schneidkammer 172 nach Beendigung des Vorheizens der Lochplatte 160' der zweiten Schneidkammer 172; und/oder
- Bereitstellen eines Anfahrventils 144, welches fluidleitend mit der ersten Schneidkammer 114 und der zweiten Schneidkammer 172 verbunden ist, wobei das Anfahrventil 144 eine Bodenstellung 196 aufweist, bei der keiner der Schneidkammern 114, 172 Schmelze 182 zugeführt wird, eine erste Produktionsstellung 198, in der ausschließlich der ersten Schneidkammer 114 Fluid zugeführt wird, und eine zweite Produktionsstellung 200, in der ausschließlich der zweiten Schneidkammer 172 Schmelze 182 zugeführt wird;
- Umschalten des Anfahrventils 144 in die Bodenstellung 196 vor dem Schwenken des Granulators 112 von der ersten Schneidkammer 114 zu der zweiten Schneidkammer 172;
- Umschalten des Anfahrventils 144 in die zweite Produktionsstellung 200, nach dem Schwenken des Granulators 112 von der ersten Schneidkammer 114 zu der zweiten Schneidkammer 172; und/oder
- Bereitstellen eines schwenkbar zu dem Extruder 52, 152 angeordneten Granulators 12, 112;
- Bereitstellen einer beweglich zu dem Extruder 52, 152 aufgehängten Schneidkammer 14, 114, 172, wobei der Extruder 52, 152 mit der Schneidkammer 14, 114, 172 und dem Granulator 12, 112 in einer Produktionskonfiguration gekoppelt ist;
- Wegschwenken des Granulators 12, 112 von der Schneidkammer 14, 114, 172;
- Wegbewegen der Schneidkammer 14, 114, 172 von dem Extruder 52, 152;
- Warten des Extruders 52, 152, insbesondere Entfernen und Warten einer Extrusionsschnecke 68, 168 des Extruders 52, 152; und/oder
- Wegbewegen eines mit der Schneidkammer gekoppelten 14, 114, 172 Ventils 44, 144, insbesondere eines Anfahrventils 44, 144; und/oder
- Warten der Schneidkammer 14, 114, 172, insbesondere Reinigen der Schneidkammer 14, 114, 172 und/oder wechseln einer Lochplatte 60, 160, 160' der Schneidkammer 14, 114, 172.

### Bezugszeichenliste

- 2: Granuliervorrichtung
- 4: Aufhängestruktur
- 6: schwenkbarer Abschnitt
- 8: ortsfester Abschnitt
- 10: Stütze
- 12: Granulator
- 14: Schneidkammer
- 16: Gelenk
- 18: Drehachse
- 20: Stützarm
- 22: distales Ende
- 24: Vertikalrichtung
- 26: Unterseite der Stütze
- 28: Rollen
- 30, 30': Laufschiene
- 32: Bypassanordnung
- 34: Längsachse der Laufschiene
- 36: Granulator-Tragstruktur
- 38: Verstellmittel der Granulator-Tragstruktur
- 40: zweite Laufschiene
- 42: Längsachse der zweiten Laufschiene
- 44: Anfahrventil
- 46, 46': vertikale Stütze
- 48: Tragstruktur von Schneidkammer und/oder Anfahrventil
- 50: Verstellmittel der Tragstruktur von Schneidkammer und/oder Anfahrventil
- 52: Extruder
- 54: zweite Drehachse
- 56: Oberseite der zweiten Laufschiene
- 58: Tragabschnitt
- 60: beheizbare Lochplatte
- 62: Prozesswasserzulauf
- 64: Prozesswasser- und Granulatablauf
- 66: Schneideinheit
- 68: Extrusionsschnecke
- 102: Granuliervorrichtung
- 104: Aufhängestruktur
- 106: schwenkbarer Abschnitt
- 108: ortsfester Abschnitt
- 110: Stütze
- 112: Granulator
- 114: Schneidkammer / erste Schneidkammer
- 116: Gelenk
- 118: Drehachse
- 120: Stützarm
- 122: distales Ende
- 124: Vertikalrichtung
- 126: Unterseite der Stütze
- 128: Rollen
- 130, 130': Laufschiene
- 132: Bypassanordnung
- 134: Längsachse der Laufschiene
- 136: Granulator-Tragstruktur
- 138: Verstellmittel der Granulator-Tragstruktur
- 140: zweite Laufschiene
- 142: Längsachse der zweiten Laufschiene
- 144: Anfahrventil
- 146, 146': vertikale Stütze
- 148: Tragstruktur von Schneidkammer und/oder Anfahrventil
- 150: Verstellmittel der Tragstruktur von Schneidkammer und/oder Anfahrventil
- 152: Extruder
- 154: zweite Drehachse
- 156: Oberseite der zweiten Laufschiene
- 158: Tragabschnitt
- 160, 160': beheizbare Lochplatte
- 162: Prozesswasserzulauf
- 164: Prozesswasser- und Granulatablauf
- 172: zweite Schneidkammer
- 174: 4/3 Wegeventil
- 176: Mittelachse des Anfahrventils
- 178: Querachse der Schneidkammer
- 180: Querachse der zweiten Schneidkammer
- 182: Schmelzefluss
- 184: Ventilbolzen
- 186: Strömungskanal für Bodenstellung
- 188: Strömungskanal für erste Produktionsstellung
- 190: Strömungskanal für zweite Produktionsstellung
- 192: Mantelfläche
- 194: Stirnfläche
- 196: Bodenstellung
- 198: erste Produktionsstellung
- 200: zweite Produktionsstellung
- 202: Schmelzeeinlass

## Patentansprüche

1. Granuliervorrichtung (2,102) zur Herstellung von Granulat aus einem Schmelzefluss, mit
- einem Granulator (12, 112),
- einer Schneidkammer (14, 114, 172), und
- einer Aufhängestruktur (4, 104) zum Aufhängen des Granulators (12, 112) und/oder der Schneidkammer,
wobei die Aufhängestruktur (4, 104) einen ortsfesten Abschnitt (8, 108) aufweist, und einen mit dem ortsfesten Abschnitt (8, 108) mittels eines Gelenkes (16, 116) drehbeweglich um eine Drehachse (18,118) verbundenen schwenkbaren Abschnitt (6, 106),
wobei der schwenkbare Abschnitt (6, 106) einen vorzugsweise im Wesentlichen horizontalen Stützarm (20, 120) aufweist, der sich ausgehend von der Drehachse (18, 118) erstreckt und ein distales Ende (22, 122) aufweist,
und dass der schwenkbare Abschnitt (6, 106) im Bereich des distalen Endes (22, 122) eine Stütze (10, 110) aufweist, welche dazu eingerichtet ist, den schwenkbaren Abschnitt (6, 106) in einer Vertikalrichtung (24, 124) abzustützen,
**dadurch gekennzeichnet, dass** der schwenkbare Abschnitt (6, 106) wenigstens eine im Wesentlichen horizontal verlaufende Laufschiene (30, 30', 130, 130') mit einer Längsachse (34, 134) aufweist oder daraus ausgebildet ist, wobei die Laufschiene (30, 30', 130, 130') dazu eingerichtet ist, den Granulator (12, 112) entlang der Längsachse (34, 134) beweglich hängend aufzunehmen.

2. Granuliervorrichtung (2,102) nach Anspruch 1,
**dadurch gekennzeichnet, dass** die Stütze (10, 110) an ihrer Unterseite (26, 126) Rollen (28, 128) aufweist.

3. Granuliervorrichtung (2,102) nach einem der vorstehenden Ansprüche,
**dadurch gekennzeichnet, dass** die Stütze (10, 110) im Wesentlichen vertikal verläuft.

4. Granuliervorrichtung (2,102) nach einem der vorstehenden Ansprüche,
**dadurch gekennzeichnet, dass** der Stützarm (20, 120) durch wenigstens eine, insbesondere zwei Laufschienen (30, 30', 130, 130') ausgebildet ist.

5. Granuliervorrichtung (2,102) nach einem der vorstehenden Ansprüche,
**dadurch gekennzeichnet, dass** der Granulator (12, 120) in einer Tragstruktur (36, 136) aufgenommen ist, wobei die Tragstruktur (36, 136) reversibel mit der wenigstens einen Laufschiene (30, 30', 130, 130') verbindbar ist, und wenigstens ein Verstellmittel (38, 138) aufweist, welches dazu eingerichtet ist, eine vertikale Position des Granulators (12, 120) einzustellen und/oder
**gekennzeichnet durch** einen mit der Schneidkammer (14, 114) fluidleitend gekoppelten Prozesswasserzulauf (62, 162), und einen mit der Schneidkammer (14, 114) fluidleitend gekoppelten Prozesswasser- und Granulatablauf (64, 164), wobei der Prozesswasserzulauf (62, 162) und der Prozesswasser- und Granulatablauf (64, 164) an dem ortsfesten Abschnitt (8, 108) der Aufhängestruktur (4, 104) angeordnet sind.

6. Granuliervorrichtung (2, 102) nach einem der vorstehenden Ansprüche,
**dadurch gekennzeichnet, dass** der ortsfeste Abschnitt (8, 108) der Aufhängestruktur (4, 104) wenigstens eine im Wesentlichen horizontal verlaufende (zweite) Laufschiene (40, 140) mit einer (zweiten) Längsachse (42, 142) aufweist,
dass die Granuliervorrichtung (2, 102) ferner ein fluidleitend mit der Schneidkammer (14, 114) gekoppeltes Anfahrventil (44, 144) aufweist,
und dass die zweite Laufschiene (40, 140) dazu eingerichtet ist, die Schneidkammer (14, 114) und/oder das Anfahrventil (44, 144) entlang der Längsachse (42, 142) beweglich zu tragen und/oder
**dadurch gekennzeichnet, dass** der ortsfeste Abschnitt (8, 108) der Aufhängestruktur (4, 104) zwei im wesentlichen vertikale Stützen (46, 46', 146, 146') und einen die vertikalen Stützen (46, 46', 146, 146') verbindenden, im Wesentlichen horizontal verlaufenden Tragabschnitt (58, 158) aufweist, wobei die zweite Laufschiene (40, 140) an dem Tragabschnitt (58, 158), insbesondere parallel zu dem Tragabschnitt (58, 158) verlaufend, angeordnet ist, insbesondere wobei
die zweite Laufschiene (40, 140) drehbeweglich um eine zweite Drehachse (54, 154) an dem ortsfesten Abschnitt (8, 108) der Aufhängestruktur (4, 104) angeordnet ist.

7. Granuliervorrichtung (2,102) zur Herstellung von Granulat aus einem Schmelzefluss, mit
- einem Granulator (12, 112),
- einer Schneidkammer (14, 114, 172), und
- einer Aufhängestruktur (4, 104) zum Aufhängen des Granulators (12, 112) und/oder der Schneidkammer,
wobei die Aufhängestruktur (4, 104) einen ortsfesten Abschnitt (8, 108) aufweist, und einen mit dem ortsfesten Abschnitt (8, 108) mittels eines Gelenkes (16, 116) drehbeweglich um eine Drehachse (18,118) verbundenen schwenkbaren Abschnitt (6, 106),
wobei der schwenkbare Abschnitt (6, 106) einen vorzugsweise im Wesentlichen horizontalen Stützarm (20, 120) aufweist, der sich ausgehend von der Drehachse (18, 118) erstreckt und ein distales Ende (22, 122) aufweist,
und dass der schwenkbare Abschnitt (6, 106) im Bereich des distalen Endes (22, 122) eine Stütze (10, 110) aufweist, welche dazu eingerichtet ist, den schwenkbaren Abschnitt (6, 106) in einer Vertikalrichtung (24, 124) abzustützen,
**dadurch gekennzeichnet, dass** die Schneidkammer (114) eine erste Schneidkammer (114) ist und die Granuliervorrichtung (102) eine zusätzliche zweite Schneidkammer (172) aufweist, wobei die erste und zweite Schneidkammer (114, 172) fluidleitend mit dem Anfahrventil (144) gekoppelt sind,
und der Granulator (112) dazu eingerichtet ist, durch Schwenken des schwenkbaren Abschnitts (106), mit der ersten Schneidkammer (114) oder der zweiten Schneidkammer (172) selektiv gekoppelt zu werden.

8. Granuliervorrichtung (102) nach Anspruch 7,
**dadurch gekennzeichnet, dass** das Anfahrventil (144) als 4/3 Wegeventil (174) ausgebildet ist, insbesondere wobei das 4/3 Wegeventil (174) derart ausgebildet und eingerichtet ist, eine fluidleitende Verbindung zu entweder der ersten oder der zweiten Schneidkammer (114, 172) bereitzustellen, insbesondere wobei das Anfahrventil (144) eine Mittelachse (176) aufweist, wobei die Drehachse (118) der Aufhängestruktur (104) im Wesentlichen der Mittelachse (176) entspricht.

9. Granuliervorrichtung (102) nach einem der Ansprüche 7 oder 8,
**dadurch gekennzeichnet, dass** die erste Schneidkammer (114) und die zweite Schneidkammer (172) mit einem gemeinsamen Prozesswasserzulauf (162) und/oder Prozesswasser- und Granulatablauf (164) gekoppelt sind.

10. Granuliervorrichtung (102) nach einem der Ansprüche 7-9,
**dadurch gekennzeichnet, dass** die Schneidkammer (114) eine erste Querachse (178) aufweist und die zweite Schneidkammer (172) eine zweite Querachse (180) aufweist, wobei die Schneidkammer (114) relativ zu der zweiten Schneidkammer (172) derart angeordnet ist, dass die erste Querachse (178) zu der zweiten Querachse (180) einen Winkel von 45° bis 135°, insbesondere 90°, einnimmt.

11. Verfahren zur Wartung einer Granuliervorrichtung (2, 102) nach einem der Ansprüche 1-6, wobei die Granuliervorrichtung (2, 102) ferner einen Extruder (52, 152) aufweist, mit den Schritten:
- Bereitstellen eines schwenkbar zu dem Extruder (52, 152) angeordneten Granulators (12, 112);
- Bereitstellen einer beweglich zu dem Extruder (52, 152) aufgehängten Schneidkammer (14, 114, 172), wobei der Extruder (52, 152) mit der Schneidkammer (14, 114, 172) und dem Granulator (12, 112) in einer Produktionskonfiguration gekoppelt ist;
- Wegschwenken des Granulators (12, 112) von der Schneidkammer (14, 114, 172);
- Wegbewegen der Schneidkammer (14, 114, 172) von dem Extruder (52, 152);
- Warten des Extruders (52, 152), insbesondere Entfernen und Warten einer Extrusionsschnecke (68, 168) des Extruders (52, 152).

12. Das Verfahren nach Anspruch 11, wobei der Schritt des Wegbewegens der Schneidkammer (14, 114, 172) von dem Extruder (52, 152) den Schritt umfasst:
- Wegbewegen eines mit der Schneidkammer gekoppelten (14, 114, 172) Ventils (44, 144), insbesondere eines Anfahrventils (44, 144).

13. Das Verfahren nach Anspruch 11 oder 12, weiterhin aufweisend den Schritt:
- Warten der Schneidkammer (14, 114, 172), insbesondere Reinigen der Schneidkammer (14, 114, 172) und/oder wechseln einer Lochplatte (60, 160, 160`) der Schneidkammer (14, 114, 172).

14. Verfahren zum Betrieb einer Granuliervorrichtung (102) nach einem der Ansprüche 7-10, mit den Schritten:
- Bereitstellen einer ersten Schneidkammer (114) und einer zweiten Schneidkammer (172), wobei die Schneidkammern (114, 172) jeweils eine beheizbare Lochplatte (160, 160') aufweisen;
- Bereitstellen eines schwenkbar zu den Schneidkammern (114, 172) angeordneten Granulators (112);
- Kopplung des Granulators (112) mit der ersten Schneidkammer (114) und Erzeugung von Granulat;
- Vorheizen der Lochplatte (160') der zweiten Schneidkammer (172) während der Erzeugung von Granulat in der ersten Schneidkammer (114);
- Schwenken des Granulators (112) von der ersten Schneidkammer (172) zu der zweiten Schneidkammer (172) nach Beendigung des Vorheizens der Lochplatte (160') der zweiten Schneidkammer (172).

15. Verfahren nach Anspruch 14, weiterhin aufweisend die Schritte
- Bereitstellen eines Anfahrventils (144), welches fluidleitend mit der ersten Schneidkammer (114) und der zweiten Schneidkammer (172) verbunden ist, wobei das Anfahrventil (144) eine Bodenstellung (196) aufweist, bei der keiner der Schneidkammern (114, 172) Schmelze (182) zugeführt wird, eine erste Produktionsstellung (198), in der ausschließlich der ersten Schneidkammer (114) Fluid zugeführt wird, und eine zweite Produktionsstellung (200), in der ausschließlich der zweiten Schneidkammer (172) Schmelze (182) zugeführt wird;
- Umschalten des Anfahrventils (144) in die Bodenstellung (196) vor dem Schwenken des Granulators (112) von der ersten Schneidkammer (114) zu der zweiten Schneidkammer (172);
- Umschalten des Anfahrventils (144) in die zweite Produktionsstellung (200), nach dem Schwenken des Granulators (112) von der ersten Schneidkammer (114) zu der zweiten Schneidkammer (172).

## Claims

1. Pelletizing apparatus (2, 102) for the production of pellets from a melt flow, comprising
- a pelletizer (12, 112),
- a cutting chamber (14, 114, 172), and
- a suspension structure (4, 104) for suspending the pelletizer (12, 112) and/or the cutting chamber,
wherein the suspension structure (4, 104) comprises a stationary portion (8, 108), and a pivotable portion (6, 106) rotatably connected to the stationary portion (8, 108) about an axis of rotation (18, 118) by means of a joint (16, 116),
wherein the pivotable portion (6, 106) comprises a preferably substantially horizontal support arm (20, 120) extending from the axis of rotation (18, 118) and having a distal end (22, 122),
and wherein the pivotable portion (6, 106) has, in a region of the distal end (22, 122), a support (10, 110) which is arranged to support the pivotable portion (6, 106) in a vertical direction (24, 124),
**characterized in that** the pivotable portion (6, 106) comprises or is formed from at least one substantially horizontally extending track (30, 30', 130, 130') having a longitudinal axis (34, 134), the track (30, 30', 130, 130') being adapted to movably receive the pelletizer (12, 112) suspended along the longitudinal axis (34, 134).

2. Pelletizing apparatus (2, 102) according to claim 1,
**characterized in that** the support (10, 110) comprises rollers (28, 128) on its underside (26, 126).

3. Pelletizing apparatus (2, 102) according to any of the preceding claims,
**characterized in that** the support (10, 110) is substantially vertical.

4. Pelletizing apparatus (2, 102) according to any of the preceding claims,
**characterized in that** the support arm (20, 120) is formed by at least one, in particular two, running rails (30, 30', 130, 130').

5. Pelletizing apparatus (2, 102) according to any one of the preceding claims,
**characterized in that** the pelletizer (12, 120) is accommodated in a support structure (36, 136), the support structure (36, 136) being reversibly connectable to the at least one running rail (30, 30', 130, 130') and having at least one adjustment means (38, 138) which is adapted to adjust a vertical position of the pelletizer (12, 120), and/or
**characterized by** a process water inlet (62, 162) fluidly coupled to the cutting chamber (14, 114), and a process water and pellet outlet (64, 164) fluidly coupled to the cutting chamber (14, 114), the process water inlet (62, 162) and the process water and pellet outlet (64, 164) being disposed on the stationary portion (8, 108) of the suspension structure (4, 104).

6. Pelletizing apparatus (2, 102) according to any of the preceding claims,
**characterized in that** the stationary portion (8, 108) of the suspension structure (4, 104) comprises at least one substantially horizontally extending (second) track (40, 140) having a (second) longitudinal axis (42, 142),
wherein the pelletizing device (2, 102) further comprises a start-up valve (44, 144) fluidly coupled to the cutting chamber (14, 114),
and wherein the second track (40, 140) is configured to support the cutting chamber (14, 114) and/or the start-up valve (44, 144) movably along the longitudinal axis (42, 142)
and/or **characterized in that** the stationary section (8, 108) of the suspension structure (4, 104) comprises two substantially vertical supports (46, 46', 146, 146') and a substantially horizontally extending support section (58, 158) connecting the vertical supports (46, 46', 146, 146'), wherein the second track (40, 140) is arranged on the support section (58, 158), in particular extending parallel to the support section (58, 158), in particular wherein
the second track (40, 140) is rotatably arranged about a second axis of rotation (54, 154) on the stationary portion (8, 108) of the suspension structure (4, 104).

7. Pelletizing apparatus (2, 102) for the production of pellets from a melt flow, comprising
- a pelletizer (12, 112),
- a cutting chamber (14, 114, 172), and
- a suspension structure (4, 104) for suspending the pelletizer (12, 112) and/or the cutting chamber,
wherein the suspension structure (4, 104) comprises a stationary portion (8, 108), and a pivotable portion (6, 106) rotatably connected to the stationary portion (8, 108) about an axis of rotation (18, 118) by means of a joint (16, 116),
wherein the pivotable portion (6, 106) comprises a preferably substantially horizontal support arm (20, 120) extending from the axis of rotation (18, 118) and having a distal end (22, 122),
and in that the pivotable portion (6, 106) has, in a region of the distal end (22, 122), a support (10, 110) which is arranged to support the pivotable portion (6, 106) in a vertical direction (24, 124),
**characterized in that** the cutting chamber (114) is a first cutting chamber (114) and the pelletizer (102) includes an additional second cutting chamber (172), the first and second cutting chambers (114, 172) being fluidly coupled to a start-up valve (144),
and the pelletizer (112) is adapted to be selectively coupled to the first cutting chamber (114) or the second cutting chamber (172) by pivoting the pivotable portion (106).

8. Pelletizing apparatus (102) according to claim 7,
**characterized in that** the start-up valve (144) is configured as a 4/3 directional valve (174), in particular wherein the 4/3 directional valve (174) is configured and arranged to provide fluid communication to either the first or the second cutting chamber (114, 172), in particular wherein the start-up valve (144) comprises a central axis (176), wherein the axis of rotation (118) of the suspension structure (104) substantially corresponds to the central axis (176).

9. Pelletizing apparatus (102) according to any one of claims 7 or 8,
**characterized in that** the first cutting chamber (114) and the second cutting chamber (172) are coupled to a common process water inlet (162) and/or process water and pellet outlet (164).

10. Pelletizing apparatus (102) according to any one of claims 7-9,
**characterized in that** the cutting chamber (114) has a first transverse axis (178) and the second cutting chamber (172) has a second transverse axis (180), the cutting chamber (114) being arranged relative to the second cutting chamber (172) in such a way that the first transverse axis (178) has an angle of 45° to 135°, in particular 90°, to the second transverse axis (180).

11. A method of servicing a pelletizing apparatus (2, 102) according to any one of claims 1-6, wherein the pelletizing apparatus (2, 102) further comprises an extruder (52, 152), comprising the steps of:
- providing a pelletizer (12, 112) pivotally arranged relative to the extruder (52, 152);
- providing a cutting chamber (14, 114, 172) movably suspended relative to the extruder (52, 152), wherein the extruder (52, 152) is coupled to the cutting chamber (14, 114, 172) and the pelletizer (12, 112) in a production configuration;
- swinging the pelletizer (12, 112) away from the cutting chamber (14, 114, 172);
- moving the cutting chamber (14, 114, 172) away from the extruder (52, 152);
- servicing the extruder (52, 152), in particular removing and servicing an extrusion screw (68, 168) of the extruder (52, 152).

12. The method of claim 11, wherein the step of moving the cutting chamber (14, 114, 172) away from the extruder (52, 152) comprises the step of:
- moving away a valve (44, 144) coupled (14, 114, 172) to the cutting chamber, in particular a start-up valve (44, 144).

13. The method of claim 11 or 12, further comprising the step of:
- maintaining the cutting chamber (14, 114, 172), in particular cleaning the cutting chamber (14, 114, 172) and/or changing a perforated plate (60, 160, 160') of the cutting chamber (14, 114, 172).

14. A method of operating a pelletizing apparatus (102) according to any one of claims 7-10, comprising the steps of:
- providing a first cutting chamber (114) and a second cutting chamber (172), the cutting chambers (114, 172) each having a heatable die plate (160, 160');
- providing a pelletizer (112) pivotally arranged relative to the cutting chambers (114, 172);
- coupling the pelletizer (112) to the first cutting chamber (114) and generating pellets;
- preheating the die plate (160') of the second cutting chamber (172) during the generation of pellets in the first cutting chamber (114);
- pivoting the pelletizer (112) from the first cutting chamber (172) to the second cutting chamber (172) after completion of preheating the die plate (160') of the second cutting chamber (172).

15. The method of claim 14, further comprising the steps of:
- providing a start-up valve (144) fluidly connected to the first cutting chamber (114) and the second cutting chamber (172), the start-up valve (144) having a bottom position (196) in which melt (182) is not supplied to either of the cutting chambers (114, 172), a first production position (198) in which fluid is supplied exclusively to the first cutting chamber (114), and a second production position (200) in which melt (182) is supplied exclusively to the second cutting chamber (172);
- switching the start-up valve (144) to the bottom position (196) prior to pivoting the pelletizer (112) from the first cutting chamber (114) to the second cutting chamber (172);
- switching the start-up valve (144) to the second production position (200), after pivoting the pelletizer (112) from the first cutting chamber (114) to the second cutting chamber (172).

## Revendications

1. Dispositif de granulation (2, 102) destiné à la fabrication de granulat à partir d'un flux de masse fondue, avec
- un granulateur (12, 112),
- une chambre de coupe (14, 114, 172), et
- une structure de suspension (4, 104) destinée à suspendre le granulateur (12, 112) et/ou la chambre de découpe,
dans lequel la structure de suspension (4, 104) présente une section stationnaire (8, 108), et une section (6, 106) pouvant pivoter reliée à la section stationnaire (8, 108) au moyen d'une articulation (16, 106) de manière mobile en rotation autour d'un axe de rotation (18, 118),
dans lequel la section pouvant pivoter (6, 106) présente un bras de soutien (20, 120) de préférence sensiblement horizontal, qui s'étend en partant de l'axe de rotation (18, 118) et présente une extrémité distale (22, 122),
et que la section pouvant pivoter (6, 106) présente dans la zone de l'extrémité distale (22, 122) un appui (10, 110), lequel est mis au point pour soutenir la section pouvant pivoter (6, 106) dans une direction verticale (24, 124),
**caractérisé en ce que** la section pouvant pivoter (6, 106) présente au moins un rail de roulement (30, 30', 130, 130') s'étendant de manière sensiblement horizontale avec un axe longitudinal (34, 134) ou en est réalisée, dans lequel le rail de roulement (30, 30', 130, 130') est mis au point pour recevoir de manière mobile et suspendue le granulateur (12, 112) le long de l'axe longitudinal (34, 134).

2. Dispositif de granulation (2, 102) selon la revendication 1,
**caractérisé en ce que** l'appui (10, 110) présente sur son côté inférieur (26, 126) des roulettes (28, 128).

3. Dispositif de granulation (2, 102) selon l'une quelconque des revendications précédentes,
**caractérisé en ce que** l'appui (10, 110) s'étend de manière sensiblement verticale.

4. Dispositif de granulation (2, 102) selon l'une quelconque des revendications précédentes,
**caractérisé en ce que** le bras d'appui (20, 120) est réalisé par au moins un, en particulier deux rails de roulement (30, 30', 130, 130').

5. Dispositif de granulation (2, 102) selon l'une quelconque des revendications précédentes,
**caractérisé en ce que** le granulateur (12, 120) est reçu dans une structure de support (36, 136), dans lequel la structure de support (36, 136) peut être reliée de manière réversible à l'au moins un rail de roulement (30, 30', 130, 130'), et présente au moins un moyen d'ajustement (38, 138), lequel est mis au point pour régler une position verticale du granulateur (12, 120), et/ou
**caractérisé par** une arrivée d'eau de traitement (62, 162) couplée de manière à acheminer un fluide à la chambre de découpe (14, 114), et une sortie d'eau de traitement et de granulat (64, 164) couplée de manière à acheminer un fluide à la chambre de découpe (14, 114), dans lequel l'arrivée d'eau de traitement (62, 162) et la sortie d'eau de traitement et de granulat (64, 164) sont disposées sur la section stationnaire (8, 108) de la structure de suspension (4, 104).

6. Dispositif de granulation (2, 102) selon l'une quelconque des revendications précédentes,
**caractérisé en ce que** la section stationnaire (8, 108) de la structure de suspension (4, 104) présente au moins un (deuxième) rail de roulement (40, 140) s'étendant de manière sensiblement horizontale avec un (deuxième) axe longitudinal (42, 142),
et que le dispositif de granulation (2, 102) présente en outre une valve de démarrage (44, 144) couplée de manière à acheminer des fluides à la chambre de découpe (14, 114),
et que le deuxième rail de roulement (40, 140) est mis au point pour supporter de manière mobile le long de l'axe longitudinal (42, 142) la chambre de découpe (14, 114) et/ou la valve de démarrage (44, 144), et/ou
**caractérisé en ce que** la section stationnaire (8, 108) de la structure de suspension (4, 104) présente deux appuis (46, 46', 146, 146') sensiblement verticaux et une section de support (58, 158) reliant les appuis verticaux (46, 46', 146, 146'), s'étendant de manière sensiblement horizontale, dans lequel le deuxième rail de roulement (40, 140) est disposé sur la section de support (58, 158), en particulier de manière à s'étendre parallèlement par rapport à la section de support (58, 158), en particulier dans lequel
le deuxième rail de roulement (40, 140) est disposé de manière mobile en rotation autour d'un deuxième axe de rotation (54, 154) sur la section stationnaire (8, 108) de la structure de suspension (4, 104).

7. Dispositif de granulation (2, 102) destiné à fabriquer du granulat à partir d'un flux de matière fondue, avec
- un granulateur (12, 112),
- une chambre de découpe (14, 114, 172), et
- une structure de suspension (4, 104) destinée à suspendre le granulateur (12, 112) et/ou la chambre de découpe,
dans lequel la structure de suspension (4, 104) présente une section stationnaire (8, 108) et une section pouvant pivoter (6, 106) reliée à la section stationnaire (8, 108) au moyen d'une articulation (16, 116) de manière mobile en rotation autour d'un axe de rotation (18, 118),
dans lequel la section pouvant pivoter (6, 106) présente un bras d'appui (20, 120) de préférence sensiblement horizontal, qui s'étend en partant de l'axe de rotation (18, 118) et présente une extrémité distale (22, 122),
et que la section pouvant pivoter (6, 106) présente, dans la zone de l'extrémité distale (22, 122), un appui (10, 110), lequel est mis au point pour soutenir la section pouvant pivoter (6, 106) dans une direction verticale (24, 124),
**caractérisé en ce que** la chambre de découpe (114) est une première chambre de découpe (114) et le dispositif de granulation (102) présente une deuxième chambre de découpe (172) supplémentaire, dans lequel la première et la deuxième chambre de découpe (114, 172) sont couplées, de manière à acheminer des fluides, à la valve de démarrage (144),
et le granulateur (112) est mis au point pour être couplé de manière sélective par pivotement de la section pouvant pivoter (106) à la première chambre de découpe (114) ou à la deuxième chambre de découpe (172).

8. Dispositif de granulation (102) selon la revendication 7,
**caractérisé en ce que** la valve de démarrage (144) est réalisée en tant qu'une valve à 4/3 voies (174), en particulier dans lequel la valve à 4/3 voies (174) est réalisée et mise au point de manière à fournir une liaison, avec acheminement de fluides, soit avec la première soit avec la deuxième chambre de découpe (114, 172), en particulier dans lequel la valve de démarrage (144) présente un axe médian (176), dans lequel l'axe de rotation (118) de la structure de suspension (104) correspond sensiblement à l'axe médian (176).

9. Dispositif de granulation (102) selon l'une quelconque des revendications 7 ou 8,
**caractérisé en ce que** la première chambre de découpe (114) et la deuxième chambre de découpe (172) sont couplées à une arrivée d'eau de traitement commune (162) et/ou à une sortie d'eau de traitement et de granulat commune (164).

10. Dispositif de granulation (102) selon l'une quelconque des revendications 7 - 9,
**caractérisé en ce que** la chambre de découpe (114) présente un premier axe transversal (178) et la deuxième chambre de découpe (172) présente un deuxième axe transversal (180), dans lequel la chambre de découpe (114) est disposée par rapport à la deuxième chambre de découpe (172) de telle manière que le premier axe transversal (178) forme par rapport au deuxième axe transversal (180) un angle de 45° à 135°, en particulier de 90°.

11. Procédé de maintenance d'un dispositif de granulation (2, 102) selon l'une quelconque des revendications 1 - 6, dans lequel le dispositif de granulation (2, 102) présente en outre une extrudeuse (52, 152), avec les étapes :
- de fourniture d'un granulateur (12, 112) disposé de manière à pouvoir pivoter par rapport à l'extrudeuse (52, 152) ;
- de fourniture d'une chambre de découpe (14, 114, 172) suspendue de manière mobile par rapport à l'extrudeuse (52, 152), dans lequel l'extrudeuse (52, 152) est couplée à la chambre de découpe (14, 114, 172) et au granulateur (12, 112) dans une configuration de production ;
- le retrait par pivotement du granulateur (12, 112) de la chambre de découpe (14, 114, 172) ;
- le retrait par déplacement de la chambre de découpe (14, 114, 172) de l'extrudeuse (52, 152) ;
- la maintenance de l'extrudeuse (52, 152), en particulier l'enlèvement et la maintenance d'une vis d'extrusion (68, 168) de l'extrudeuse (52, 152).

12. Procédé selon la revendication 11, dans lequel l'étape du retrait par déplacement de la chambre de découpe (14, 114, 172) de l'extrudeuse (52, 152) comprend l'étape :
- de retrait par déplacement d'une valve (44, 144) couplée à la chambre de découpe (14, 114, 172), en particulier d'une valve de démarrage (44, 144).

13. Procédé selon la revendication 11 ou 12, présentant par ailleurs l'étape :
- de maintenance de la chambre de découpe (14, 114, 172), en particulier de nettoyage de la chambre de découpe (14, 114, 172) et/ou de changement d'une plaque perforée (60, 160, 160') de la chambre de découpe (14, 114, 172) .

14. Procédé pour faire fonctionner un dispositif de granulation (102) selon l'une quelconque des revendications 7 - 10, avec les étapes :
- de fourniture d'une première chambre de découpe (114) et d'une deuxième chambre de découpe (172), dans lequel les chambres de découpe (114, 172) présentent respectivement une plaque perforée (160, 160') pouvant être chauffée ;
- de fourniture d'un granulateur (112) disposé de manière à pouvoir pivoter par rapport aux chambres de découpe (114, 172) ;
- de couplage du granulateur (112) à la première chambre de découpe (114) et de production du granulat ;
- de préchauffage de la plaque perforée (160') de la deuxième chambre de découpe (172) pendant la production du granulat dans la première chambre de découpe (114) ;
- de pivotement du granulateur (112) depuis la première chambre de découpe (172) vers la deuxième chambre de découpe (172) à la fin du préchauffage de la plaque perforée (160') de la deuxième chambre de découpe (172) .

15. Procédé selon la revendication 14, présentant par ailleurs les étapes :
- de fourniture d'une valve de démarrage (144), laquelle est reliée, avec acheminement de fluides, à la première chambre de découpe (114) et à la deuxième chambre de découpe (172), dans lequel la valve de démarrage (144) présente une position au sol (196), dans laquelle de la masse fondue (182) n'est amenée à aucune des chambres de découpe (114, 172), une première position de production (198), dans laquelle du fluide est amené exclusivement à la première chambre de découpe (114) et une deuxième position de production (200), dans laquelle de la masse fondue (182) est amenée exclusivement à la deuxième chambre de découpe (172) ;
- de commutation de la valve de démarrage (144) dans la position au sol (196) avant le pivotement du granulateur (112) de la première chambre de découpe (114) vers la deuxième chambre de découpe (172) ;
- de commutation de la valve de démarrage (114) dans la deuxième position de production (200) après le pivotement du granulateur (112) de la première chambre de découpe (114) vers la deuxième chambre de découpe (172) .
